# EUROPEAN PATENT APPLICATION

(11) **EP 2 037 138 A2**
(43) Date of publication of application: **18.03.2009**
(21) Application number: 08164300.9
(22) Date of filing: 12.09.2008
(51) Int. Cl.: F16C 29/04, F16C 29/00, B23Q 1/01, B23Q 1/40, B23Q 1/58

(54) **Device for supporting and handling equipment**

(30) Priority: 13.09.2007 IT TO20070645
(71) Applicant: Alusic S.r.l., 12084 Mondovi' (IT)
(72) Inventor: Denegri, Luisa, 12084 Mondovi' (IT)
(74) Representative: Jorio, Paolo

(57) **Abstract**

A device (1) for supporting and handling equipment has an elongated supporting section (2) made of aluminium and suitable to be connected to a coupling member (6), a pair of rectilinear rolling guideways (15) which are U-shaped and defined by the elongated section (2), and a carriage (21) provided with a supporting structure (25) consisting of a one-piece aluminium section and a plurality of wheels (20) rotatable along the rectilinear guideways (15); the rectilinear guideways (15) being arranged on opposite sides of a tubular supporting portion (9) of the elongated supporting section (2).

## Description

The present invention relates to a device for supporting and handling equipment.

In the field of handling equipment in general, such as, for instance, supporting surfaces, and various tools, the need is felt to produce supporting and handling devices having dimensions transversal to the direction of travel and of limited weight but which ensure constant efficiency and functional reliability.

Moreover, for uniformity of scale, to reduce the number of components on-hand during assembly or maintenance, the need is also felt for supporting and handling devices that are readily convertible, i.e. which can be used both for moving supported equipment/tools and for moving suspended equipment/tools.

The purpose of the present invention is to produce a supporting and handling device which satisfies the above needs and is, at the same time, simple and inexpensive to produce.

According to the present invention a device for supporting and handling equipment is produced comprising an elongated supporting section made of aluminium and suitable to be connected to a coupling member, a pair of rectilinear rolling guideways defined by said elongated section, and a carriage comprising a supporting structure consisting of a one-piece aluminium section and a plurality of wheels rotatable along said guideways, said guideways being arranged on opposite sides of a tubular supporting portion of said elongated supporting section.

Preferably in the device defined above each of said rectilinear rolling guideways has a cross-section that is substantially U-shaped and said tubular supporting portion comprises two mutually facing and mutually spaced walls; each of said walls defines a lateral support for respective said wheels and delimits a recess for partially housing a hub of said respective wheels.

Moreover, the device defined above preferably comprises a pair of additional rectilinear rolling guideways for said wheels; each of said additional rectilinear rolling guideways being arranged in a position facing a corresponding said rectilinear rolling guideway, and said wheels being suitable to roll selectively along said guideways.

The present invention will now be described with reference to the attached drawings, illustrating a nonlimiting embodiment thereof, in which:

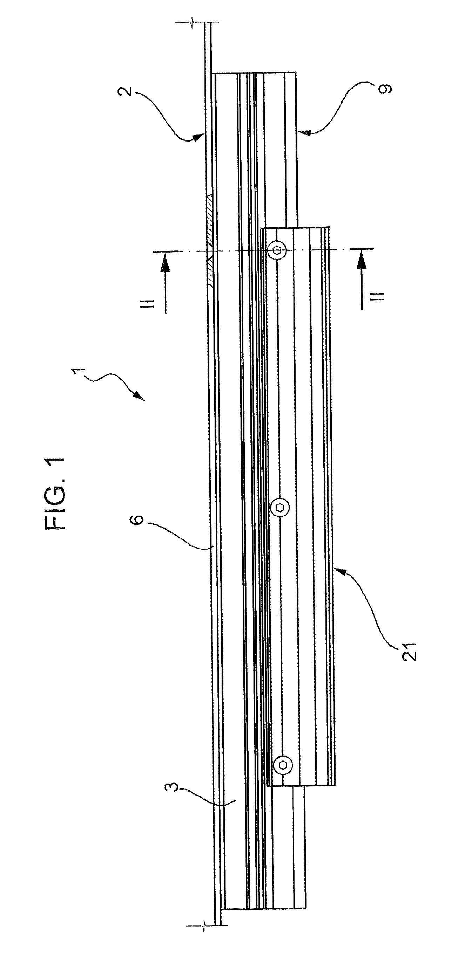

figure 1 shows a side elevation view of a preferred embodiment of the supporting and handling device according to the present invention;
figure 2 is a cross-section, on a greatly enlarged scale, along the line II-II of figure 1; and
figure 3 is similar to figure 2 and shows the device of figure 2 in a different functional configuration.

In the accompanying drawings, number 1 indicates, as a whole, a device for supporting and handling equipment and/or parts in general and comprising an elongated supporting member 2 defined by a section element made of anodized aluminium, conveniently produced by means of a drawing or extrusion process and suitable to be connected to a fixed support 6. For that purpose, the elongated member 2 comprises a peripheral coupling portion 3 extending symmetrically with respect to a longitudinal plane P of symmetry and delimited laterally by two flat surfaces 4 and 5 parallel to one another and to the plane P and arranged at the same distance D from said plane P. Respective retaining seats 8 are obtained through the surfaces 4 and 5 and through a further lateral surface 6 orthogonal to the surfaces 4 and 5, suitable to enable the peripheral portion 3 to be connected to the fixed support 6.

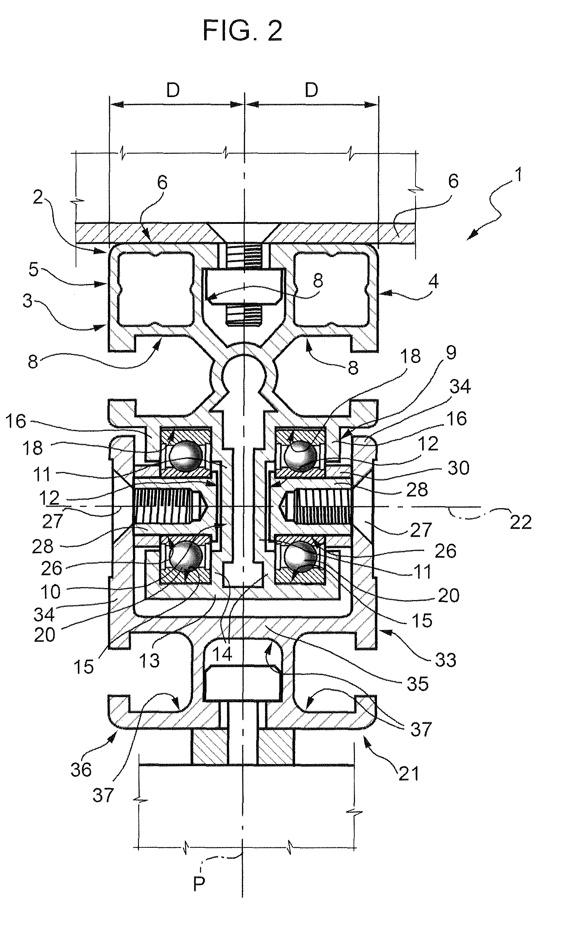

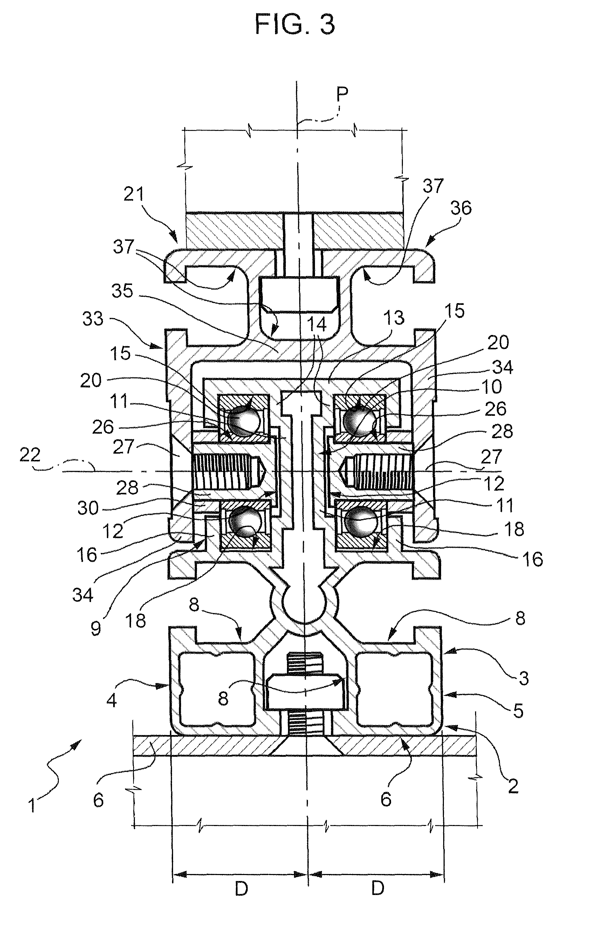

With specific reference to figures 2 and 3, the elongated member 2 also comprises a hollow T-shaped supporting and guiding portion 9 made as a one-piece construction with the coupling portion 3 and arranged symmetrically with respect to the plane P of symmetry.

The portion 9 comprises a hollow or tubular central core 10, which in turn comprises two mutually spaced walls 11 arranged on opposite sides of the plane P and each delimiting a relative external recess 12. The core 10 also comprises a peripheral C-shaped cross member 13, which, together with a pair of end portions 14 of the walls 11, delimits two U-shaped rolling or guiding tracks or guideways 15 arranged at the same distance from the plane P. The core 10 also delimits, with respective intermediate walls 16 of the coupling portion 3, two additional U-shaped tracks or guideways 18, dimensionally identical to the tracks 15 and each arranged in a position facing and corresponding to a relative said U-shaped track 15.

The mutually facing U-shaped guideways 15, 18 house respective wheels 20 of a carriage 21 rotatingly about respective axes 22 orthogonal to the plane P and in an axially fixed position. The wheels 20 consist of ordinary radial ball bearings and have outside diameters, as an approximation by defect, equal to the distance between the base surfaces of the relative guideways 15 and 18, and a width measured orthogonal to the plane P, as an approximation by defect, equal to the distance of the lateral supporting surfaces of said guideways 15, 18.

Again with reference to figures 2 and 3, the carriage 21 comprises a structure 25 made as a one-piece construction consisting of a single section element in anodized aluminium, conveniently produced by means of extrusion or drawing, and connected to respective hubs 26 supporting the wheels 20 by means of relative screws 27. Each of the hubs 26 is mushroom-shaped and comprises a retaining head 28 housed in a respective recess 12 and an internally threaded leg 29, in which the relative screw 27 is screwed and on which the relative wheel 20 is mounted, the internal ring of which is clamped against the relative head 28 by means of a relative spacer 30.

The structure 25 of the carriage 21 comprises a forked portion 33 which, in turn, comprises two side walls 34 in the form of plates or faces connected to the hubs 26 by means of the screws 27 and a cross member 35 forming part of a coupling portion 36 delimiting three retaining seats 37 identical to the retaining seats 8 and suitable to enable the coupling of various types of equipment, for example supporting surfaces, tools, etc.

Again with reference to figures 2 and 3, the elongated member 2 and the structure 25 of the carriage 21 are contained within two planes K parallel to the plane P and arranged at the same distance D from said plane P and which, in the particular example described herein, also contain the opposite lateral surfaces of the elongated member 2 and the surfaces laterally delimiting on the outside the plate-type lateral walls 34.

From the above description, it is apparent that in the device 1 described herein the wheels 20 can selectively rotate along the base surfaces of the guideway 15 and of the guideways 18 so as to enable the device 1 to move suspended loads, as shown in figure 2, or supported loads, as shown in figure 3 without the need for any modifications, adjustments or specific additional components. In other words, depending on the arrangement, the device 1 described herein adapts itself by assuming one or the other different operating or functional positions.

The use of the device 1 with both suspended loads or supported loads, i.e. the possibility of rotating the entire device 1 by substantially 180° without any interference whatsoever is guaranteed by the fact that both the elongated supporting member 2 and the structure 25 of the carriage 21 have respective lateral surfaces that lie on the same planes at the same distance from the plane P of symmetry of said device 1.

The device 1 described herein is also extremely stable when loaded due to the fact that the wheels 20 rotate inside U-shaped guideways and in particular, inside a respective pair of mutually facing U-shaped guideways, which, when necessary, define lateral supports for diametrically opposing portions of the wheels 20.

The stability of the device 1 when loaded is further guaranteed by the fact that the core 10 of the supporting and guiding portion 9 is hollow and, in particular, delimited by two ribbed surfaces that are transversely spaced with respect to one another and to the plane P of symmetry which help to increase the rigidity of said supporting and guiding portion 9.

From the above it is apparent that modifications and variations may be made to the device 1 described herein without departing from the scope of the claims. In particular, the peripheral portion 3 of the elongated supporting member 2 and the structure 25 of the carriage 21 could be geometrically different. The structure 25 could be connected to intermediate sections that interface the equipment to be supported and handled.

## Claims

1. Device for supporting and handling equipment comprising an elongated supporting section made of aluminium and suitable to be connected to a coupling member, a pair of rectilinear rolling guideways defined by said elongated section element, and a carriage comprising a supporting structure made as a one-piece section in aluminium and a plurality of wheels rotatable along said guideways, said guideways being arranged on opposite sides of a tubular supporting portion of said elongated supporting section.

2. Device according to claim 1, **characterized in that** each of said rectilinear rolling guideways has a substantially U-shaped cross-section.

3. Device according to claim 1 or 2, **characterized in that** said tubular supporting portion comprises two mutually facing and mutually spaced walls; each said wall defining a lateral support for respective said wheels and delimiting a recess to partially house a hub of said respective wheels.

4. Device according to any one of the previous claims, **characterized in that** it also comprises a pair of additional rectilinear rolling guideways for said wheels; each of said additional rectilinear rolling guideways being arranged in a position facing a corresponding said rectilinear rolling guideway and said wheels being suitable to rotate selectively along a base track of said guideways.

5. Device according to claim 4, **characterized in that** said wheels always engage said guideways regardless of the base track along which said wheels rotate.

6. Device according to claim 4 or 5, **characterized in that** said mutually facing base tracks are arranged at a distance from one another, as an approximation by excess, equal to an outside diameter of said wheels.

7. Device according to one of the claims from 4 to 6, **characterized in that** each of said additional rectilinear rolling guideways has a substantially U-shaped cross-section.

8. Device according to claim 7, **characterized in that** each of said guideways has a pair of mutually facing rectilinear lateral guiding surfaces spaced from one another by an amount, as an approximation by excess, equal to the width of said wheels.

9. Device according to any one of the previous claims, **characterized in that** said elongated supporting section is delimited by two opposite external lateral surfaces lying in respective mutually parallel planes; said carriage extending completely into the space delimited by said two planes.

10. Device according to claim 9, **characterized in that** said supporting structure is delimited externally by a pair of two additional opposing external lateral surfaces; said additional opposing external lateral surfaces each lying in a relative said plane in a position in the same plane as a corresponding said external lateral surface.

11. Device according to any one of the previous claims, **characterized in that** said elongated supporting section and said supporting structure comprise respective mutually identical retaining seats for the connection to said coupling member and, respectively, to a piece of equipment to be handled.
